(19) Europäisches Patentamt
European Patent Office
Office européen des brevets

(11) **EP 0 690 821 B1**

(12) **EUROPÄISCHE PATENTSCHRIFT**

(45) Veröffentlichungstag und Bekanntmachung des Hinweises auf die Patenterteilung:
**25.06.1997 Patentblatt 1997/26**

(21) Anmeldenummer: **94911185.0**

(22) Anmeldetag: **16.03.1994**

(51) Int. Cl.⁶: $C01B\ 39/00$

(86) Internationale Anmeldenummer:
**PCT/EP94/00836**

(87) Internationale Veröffentlichungsnummer:
**WO 94/21558 (29.09.1994 Gazette 1994/22)**

(54) **VERFAHREN ZUR HERSTELLUNG VON FEINSTTEILIGEN ZEOLITHISCHEN ALKALIMETALLALUMINIUMSILICATEN**

PROCESS FOR PREPARING FINELY GROUND ZEOLITHIC ALKALI METAL ALUMINUM SILICATES

PROCEDE DE PREPARATION DE SILICATES D'ALUMINIUM DE METAUX ALCALINS ZEOLITHIQUES FINEMENT PULVERISES

(84) Benannte Vertragsstaaten:
**AT BE CH DE DK ES FR GB GR IE IT LI LU MC NL PT SE**

(30) Priorität: **25.03.1993 DE 4309656**

(43) Veröffentlichungstag der Anmeldung:
**10.01.1996 Patentblatt 1996/02**

(73) Patentinhaber: **Henkel Kommanditgesellschaft auf Aktien**
**40191 Düsseldorf (DE)**

(72) Erfinder:
• **KUHM, Peter**
  **D-40724 Hilden (DE)**
• **SALZ, Rainer**
  **D-40589 Düsseldorf (DE)**
• **BLASEY, Gerhard**
  **D-40599 Düsseldorf (DE)**

(56) Entgegenhaltungen:
**EP-A- 0 034 693**         **EP-A- 0 034 694**
**EP-A- 0 034 695**         **EP-A- 0 034 696**
**EP-A- 0 485 262**         **FR-A- 2 370 688**
**FR-A- 2 370 689**         **FR-A- 2 370 690**
**FR-A- 2 370 691**         **FR-A- 2 370 692**
**FR-A- 2 370 693**

## Beschreibung

Die Erfindung betrifft ein Verfahren zur Herstellung von feinstteiligen Alkalimetallaluminiumsilicaten, insbesondere von Zeolithen vom Typ A, vom Typ P sowie vom Faujasit-Typ (X und Y).

Derartige Alkalimetallaluminiumsilicate finden beispielsweise Verwendung als Builderstoffe für Wasch-, Spül- und Reinigungsmittel, als Molekularsiebe, Katalysatoren und Sorbentien sowie als Zusatz zu keramischen Fritten und Glasuren.

Zwei wichtige Kriterien für den Einsatz von Zeolithen in Wasch-, Spül- und Reinigungsmitteln, aber auch als Zusatz zu keramischen Fritten oder Glasuren, sind die mittlere Teilchengröße (angegeben als $d_{50}$-Wert) und die Breite des Teilchengrößenverteilungsspektrums. Der $d_{50}$-Wert gibt an, daß 50 Gewichts% der vermessenen Probe aus Teilchen bestehen, die kleiner sind als der angegebene Wert. Die Meßmethoden zur Ermittlung des $d_{50}$-Werts sind sehr unterschiedlich, die nach den unterschiedlichen Methoden erhaltenen Meßwerte nicht einfach untereinander zu vergleichen. Im Rahmen der Erfindung wird bei der Angabe des $d_{50}$-Werts von Lichtbeugungs- und Lichtstreumethoden ausgegangen. Dieses Verfahren ist beispielsweise in H. Wachernig, Sprechsaal, Band 121, Nr. 3, 1988, Seiten 213 bis 215, beschrieben.

Ein weiteres wichtiges Kriterium für den Einsatz von Zeolithen in Wasch-, Spül- und Reinigungsmitteln ist das Kationenaustauschvermögen, speziell das Austauschvermögen gegenüber Calciumionen. Die entsprechenden Werte wurden durch Versetzen einer Calciumchloridlösung mit dem entsprechenden Zeolithen, Filtration und komplexometrischer Titration der restlichen, in der Lösung vorhandenen Calciumionen ermittelt.

Es sind bereits verschiedene Verfahren zur Herstellung feinstteiliger Zeolithe vom Typ A bekannt.

Die DE-A-29 51 192 beschreibt ein Verfahren zur Herstellung von Zeolith A von kleiner und einheitlicher Teilchengröße. Zur Steuerung der Teilchengröße dienen folgende Regelgrößen:

1) das stöchiometrische Verhältnis $SiO_2/Al_2O_3$,
2) das stöchiometrische Verhältnis $H_2O/Na_2O$,
3) die Kristallisationszeit des amorphen Alumosilicatgels bei gegebener Temperatur,
4) das stöchiometrische Verhältnis $Na_2O/Al_2O_3$ und
5) die Konzentration an $Al_2O_3$.

Durch Erhöhung der Feststoffkonzentration einerseits und durch Vergrößerung des Verhältnisses $Na_2O/Al_2O_3$ im Reaktionsansatz andererseits, d.h. in den Lösungen, die nach ihrer Vereinigung ein amorphes Alumosilicatgel erzeugen, wird die Teilchengröße des nach Kristallisation gebildeten Zeoliths verringert. Dieses Verfahren hat seine natürlichen Grenzen: Wird beispielsweise die Feststoffkonzentration zu stark erhöht, weitet sich das Kornspektrum auf. Ist das Verhältnis $Na_2O/Al_2O_3$ zu groß, ist die Zeit zwischen vollständigem Umsatz zu Zeolith 4A und der darauf folgenden Umwandlung zu Hydroxysodalith sehr kurz, so daß die zur Weiterverarbeitung der Zeolithsuspension notwendige Zeit unterschritten wird.

Aus der DE-A-27 04 310 ist es bekannt, bei der Herstellung von Alkalimetallaluminiumsilicaten nach dem Vermischen der Reaktionskomponenten unter starkem Rühren wenigstens so lange weiter stark zu rühren, bis das Viskositätsmaximum überschritten oder das Viskositätsmaximum gegebenenfalls noch nicht vollständig erreicht worden ist, worauf man die Suspensionen wenigstens einmal recyclierend durch eine Zerkleinerungsvorrichtung führt und dann gegebenenfalls bis zur Kristallisation bei erhöhter Temperatur hält.

Aus der DE-A-27 34 296 ist bekannt, bei der Herstellung von feinteiligen Natriumaluminiumsilicaten nach dem raschen Durchmischen der wäßrigen Natriumaluminatlösung mit der wäßrigen Natriumsilicatlösung die erhaltene Suspension kurze Zeit unter Rühren bei dieser Temperatur zu belassen, bevor bei erhöhter Temperatur der Kristallisationsschritt durchgeführt wird.

Aus der DE-A-30 11 834 ist ein Verfahren zur Herstellung feinstteiliger zeolithischer Natriumaluminiumsilicate bekannt, bei dem während einer diskontinuierlichen Kristallisation Wasserdampf eingeleitet und gleichzeitig mit mehrstufigen Rührwerken hoher Scherwirkung gerührt wird.

Aus der DE-A-29 41 636 ist ebenfalls ein Verfahren zur kontinuierlichen Herstellung feinstteiliger zeolithischer Natriumaluminiumsilicate bekannt, bei dem Suspensionen des röntgenamorphen Natriumaluminiumsilicats kontinuierlich einen stufig wirkenden und/oder stufig ausgeführten Kristallisationsreaktor mit wenigstens 20 Stufen durchströmen, wobei die Suspensionen bei einer Temperatur von 80 bis 100 °C so lange im Reaktor gehalten werden, bis der Kristallisationsgrad des zeolithischen Natriumaluminiumsilicats wenigstens 80 % der theoretisch erzielbaren Kristallinität erreicht hat.

In den DE-A-26 51 419, 26 51 420, 26 51 436, 26 51 437, 26 51 445 und 26 51 485 werden Verfahren zur Herstellung feinteiliger kristalliner Zeolithpulver vom Typ A beschrieben, wobei durch stufenweises Vermischen der Reaktionskomponenten über einen längeren Zeitraum die Ausfällung des primär gebildeten NatriumaluminiumsilicatGels verzögert wird. Das erhaltene Gel wird anschließend bei einer Temperatur, die höher liegt als der Temperaturbereich der Fällung, kristallisiert. Diese Verfahrensführung bedingt vergleichsweise niedrige Raum/Zeit-Ausbeuten.

In den DE-A-30 07 044, 30 07 080, 30 07 087 und 30 07 123 werden ähnliche Verfahren beschrieben, bei denen die Reaktionskomponenten gleichfalls in mehreren Teilschritten miteinander vermischt und zwischenzeitlich Formier- bzw. Reifezeiten eingehalten werden. Auch hierbei erfolgt die Kristallisation nachträglich bei höherer Temperatur. Die mittleren Teilchengrößen der erhaltenen kristallinen Zeolithe betragen hierbei bis zu 9 $\mu$m. Im übrigen sei hierzu auf das nachfolgende Vergleichsbeispiel 9 verwiesen.

Für Zeolithe vom Faujasit-Typ sind ebenfalls Verfahren zur Herstellung besonders feinstteiliger Produkte bekannt.

In der US-A-3 516 786 wird ein Verfahren beschrieben, das durch Zusätze von 0,1 bis 20 % eines organischen Lösungsmittels, wie Methanol oder Dimethylsulfoxid, zu einem Alumosilicatgel vor der Kristallisation besonders kleine Teilchen hervorbringt. Die Aufarbeitung der Prozeßlaugen bedingt wegen der Giftigkeit der genannten Lösungsmittel besondere Vorkehrungen.

Vom Zeolith P sind mehrere strukturell unterschiedliche Varianten bekannt, die sich vor allem durch die Symmetrie des Kristallgitters unterscheiden. Für Anwendungen in Wasch-, Spül- und Reinigungsmitteln werden allgemein P-Zeolithe des Typs $P_c$ (auch als P1, B1 beschrieben, kubische Form) und des Typs $P_t$ (auch als P2 beschrieben, tetragonale Form) sowie deren Mischkristalle oder Gemische aus den beiden Formen bevorzugt. Das Si : Al-Verhältnis liegt zwischen 1,3 : 1 und 0,9 : 1 bei einem Calciumbindevermögen zwischen 130 und 165 mg CaO pro g wasserfreies Alumosilicat.

Die Aufgabe der vorliegenden Erfindung war es, ein Verfahren zur Herstellung feinstteiliger zeolithischer Alkalimetallaluminiumsilicate, insbesondere von Zeolithen vom Typ A, vom Typ P sowie vom Faujasit-Typ (Zeolithe X und Y), zu entwickeln, welches die genannten Zeolithe in besonders feinstteiliger Form, mit besonders engem Teilchengrößenverteilungsspektrum und besonders hohem Calciumbindevermögen erzeugt, wobei der Verfahrensablauf eine hohe Raum/Zeit-Ausbeute ermöglicht.

Die Erfindung betrifft somit ein Verfahren zur Herstellung von feinstteiligen zeolithischen Alkalimetallaluminiumsilicaten der allgemeinen Formel (I)

$$x \, Me_2O \cdot Al_2O_3 \cdot y \, SiO_2 \cdot z \, H_2O \qquad\qquad (I)$$

in der

Me     Natrium und/oder Kalium,
x       eine Zahl im Bereich von 0,8 bis 1,3,
y       eine Zahl im Bereich von 1,3 bis 10 und
z       eine Zahl im Bereich von 0 bis 6

bedeuten,
durch Vermischen der Reaktionskomponenten wassergelöstes Alkalimetallsilicat und wassergelöstes Alkalimetallaluminat in Gegenwart einer stöchiometrisch überschüssigen Menge an wassergelöstem Alkalimetallhydroxid, anschließendem Altern des erhaltenen Gels und Kristallisation,
dadurch gekennzeichnet, daß man

(a) die Reaktionskomponenten bei einer Temperatur im Bereich von 20 bis 70 °C im Verlauf von weniger als 10 Minuten unter starkem Rühren miteinander vermischt, wobei man entweder mindestens eine der beiden Reaktionskomponenten im Unterschuß, bezogen auf die stöchiometrisch erforderliche Menge, oder beide Reaktionskomponenten in der stöchiometrisch erforderlichen Menge einsetzt,
(b) das Reaktionsgemisch anschließend für eine Dauer im Bereich von 5 bis 40 Minuten bei der gemäß Schritt (a) eingestellten Temperatur unter Rühren beläßt,
(c) im Anschluß an den Alterungsschritt (b) das Reaktionsgemisch im Verlauf von 5 bis 30 Minuten auf eine Temperatur im Bereich von mehr als 70 °C bis zum Siedepunkt des Reaktionsgemisches unter Rühren erhitzt,
(d) das erhaltene amorphe Alkalimetallaluminiumsilicat-Gel bei der gemäß Schritt (c) eingestellten Temperatur während einer Dauer von mindestens 10 Minuten kristallisieren läßt,
(e) wobei man dem Reaktionsgemisch während des Kristallisationsschrittes (d) 2 bis 50 Mol-% mindestens einer der beiden Reaktionskomponenten, bezogen auf die bereits im Schritt (a) jeweils eingesetzte Menge der Reaktionskomponenten, entweder zum Ausgleich des stöchiometrischen Unterschusses oder als stöchiometrischer Überschuß zufügt.

Die vorstehende allgemeine Formel (I) umfaßt eine Vielzahl von Substanzen, die sich in ihrer chemischen Zusammensetzung zwar oft nur geringfügig, bezüglich ihrer Struktur und Eigenschaften jedoch erheblich unterscheiden. Zur Identifizierung derartiger Zeolithe wird neben der chemischen Zusammensetzung bei kristallinen Typen im allgemeinen das Röntgenbeugungsdiagramm herangezogen. Von technischem Interesse sind hier insbesondere Zeolithe vom Typ A, vom Typ P sowie vom Faujasit-Typ.

Eine bevorzugte Ausführungsform der vorliegenden Erfindung betrifft die Herstellung der vorgenannten, speziellen Zeolith-Typen. Diese Zeolith-Typen sind dadurch gekennzeichnet, daß in der allgemeinen Formel (I) y eine Zahl

- im Bereich von 1,35 bis 2,35 für Zeolithe vom Typ A,
- im Bereich von 1,85 bis 3 für Zeolithe vom Typ P und
- im Bereich von 2,5 bis 10 für Zeolithe vom Faujasit-Typ

bedeutet.

Mit Hilfe des erfindungsgemäßen Verfahrens ist es möglich, zeolithische Alkalimetallaluminiumsilicate, insbesondere die vorstehend genannten speziellen Zeolithe, in besonders feinstteiliger Form und mit besonders engem Teilchengrößenverteilungsspektrum herzustellen. Dementsprechend ist gemäß einer weiteren bevorzugten Ausführungsform das erfindungsgemäße Verfahren dadurch gekennzeichnet, daß die mittlere Teilchengröße, jeweils angegeben als $d_{50}$-Wert, der gewonnenen kristallinene Zeolithe

- für Zeolithe vom Typ A kleiner als 4 $\mu$m,
- für Zeolithe vom Typ P kleiner als 2 $\mu$m und
- für Zeolithe vom Faujasit-Typ kleiner als 6 $\mu$m

beträgt. Ferner zeichnen sich die nach dem erfindungsgemäßen Verfahren hergestellten Zeolithe durch ein sehr hohes Kationenaustauschvermögen - entsprechend einem hohen Calciumbindevermögen - aus.

Ein weiterer vorteilhafter Effekt des erfindungsgemäßen Verfahrens ist darin zu sehen, daß die nach Abtrennung der gebildeten, kristallinen Zeolithe verbleibenden Mutterlaugen - je nach Verfahrensführung - einen sehr geringen Gehalt an $SiO_2$ oder $Al_2O_3$ aufweisen. Dies erweist sich insbesondere dann als vorteilhaft, wenn derartige Mutterlaugen entweder zur Herstellung von Aluminatlauge als Edukt für die Synthese von Zeolithen, oder zur Herstellung von Wasserglaslösungen (Hydrothermalsynthese) als Edukt für die Synthese von Zeolithen im Kreislaufverfahren verwendet werden sollen. Das in der Mutterlauge enthaltene $SiO_2$ oder $Al_2O_3$ reagiert nämlich ansonsten entweder mit dem gebildeten Aluminat oder mit dem gebildeten Silicat zu Hydroxysodalith, der bisher keiner wirtschaftlichen Verwendung zugeführt werden konnte.

Gemäß der vorstehend angeführten allgemeinen Formel (I) besteht das Alkalimetall-Kation in den erfindungsgemäß herzustellenden zeolithischen Alkalimetallaluminiumsilicaten aus Natrium oder Kalium, wobei diese beiden Kationen auch im Gemisch vorliegen können. Wenngleich in den nachstehenden Ausführungen und in den Beispielen ausschließlich von Natrium als Alkalimetallkation die Rede ist, so beziehen sich diese Ausführungen in gleicher Weise auch auf Kalium als Alkalimetallkation. In beiden Fällen ist ein gutes Kationenaustauschvermögen, insbesondere gegenüber Calcium-Kationen, gewährleistet. Im Rahmen der vorliegenden Erfindung ist jedoch - vorwiegend aus Kostengründen - Natrium als Alkalimetallkation bevorzugt. Sofern beide Alkalimetallkationen im Gemisch vorliegen, ist es erfindungsgemäß bevorzugt, daß Natrium im Überschuß, d.h. mehr als 50 Mol-%, in den gebildeten Zeolithen als Alkalimetallkation vorhanden ist. Dementsprechend ist eine weitere bevorzugte Ausführungsform des erfindungsgemäßen Verfahrens dadurch gekennzeichnet, daß das Alkalimetallkation des Alkalimetallsilicats und/oder des Alkalimetallaluminats, die als Reaktionskomponenten eingesetzt werden, ausgewählt ist aus Natrium und Kalium, mit der Maßgabe, daß wenigstens 50 Mol-% der Alkalimetallkationen im zeolithischen Alkalimetallaluminiumsilicat Natriumkationen sind.

Unter den wesentlichen Merkmalen des erfindungsgemäßen Verfahrens ist insbesondere das vorstehend unter (e) geschilderte Merkmal hervorzuheben, wonach mindestens eine der beiden Reaktionskomponenten - Alkalimetallsilicat und Alkalimetallaluminat - während des Kristallisationsschrittes dem Reaktionsgemisch zugesetzt werden. Dieses "Nachdosieren" während des Kristallisationsschrittes hat - neben den anderen erfindungswesentlichen Merkmalen - einen entscheidenden Einfluß auf die mit dem erfindungsgemäßen Verfahren erzielbaren positiven Effekte, die sich inbesondere in der nur geringen mittleren Teilchengröße der erhaltenen kristallinen Zeolithe wiederspiegelt. Dabei ist es für das erfindungsgemäße Verfahren nicht von Bedeutung, ob beim Vermischen der Reaktionskomponenten miteinander gemäß Schritt (a) zunächst mit einem stöchiometrischen Unterschuß einer der beiden Reaktionskomponenten gearbeitet und die fehlende Menge dieser Reaktionskomponente, bezogen auf die stöchiometrisch erforderliche Menge, erst während des Kristallisationsschrittes nachdosiert wird oder ob beim Fällungsschritt (a) die beiden Reaktionskomponenten entsprechend der stöchiometrisch erforderlichen Menge eingesetzt und mindestens eine der Reaktionskomponenten während des Kristallisationsschrittes im stöchiometrischen Überschuß nachdosiert wird.

Wie bereits gesagt, ist die Kombination der vorstehend aufgelisteten Merkmale (a) bis (e) für das erfindungsgemäße Verfahren von wesentlicher Bedeutung. Nachstehend werden daher die erfindungswesentlichen Merkmale einzeln betrachtet:

Der Verfahrensschritt (a) betrifft das Vermischen der Reaktionskomponenten. Er kann auch als "Fällungsschritt" bezeichnet werden, da hierbei das primär gebildete, amorphe AlkalimetallaluminiumsilicatGel ausfällt. Von erfindungswesentlicher Bedeutung sind hierbei zwei Parameter, nämlich einmal die Dauer des Fällungsschrittes bzw. die Dauer des Vermischens der Reaktionskomponenten sowie die Temperatur, welche die wäßrigen Lösungen der Reaktionskomponenten bzw. das gebildete Reaktionsgmisch aufweisen. Das Vermischen der Reaktionskomponenten soll möglichst schnell erfolgen, d.h. im Verlauf von weniger als 10 Minuten. Erfindungsgemäß ist es hierbei bevorzugt, daß die Dauer des Vermischens der Reaktionskomponenten weniger als 5 Minuten betragen soll. Die Angabe eines unteren Grenzwertes bezüglich der Dauer des Vermischens ist nicht sinnvoll, da dies primär von der Menge der zu vermischenden Reaktionskomponenten abhängt. Die Temperatur der Reaktionskomponenten bzw. des gebildeten Reaktionsgemisches soll erfindungsgemäß im Bereich von 20 bis 70 °C liegen. Erfindungsgemäß bevorzugt ist hierbei ein Temperaturbereich von 40 bis 65 °C, wobei sich dieser Temperaturbereich insbesondere auf die Herstellung von Zeolith vom Typ A bezieht. Generell gilt, daß die Temperatur beim Vermischen auf den jeweils gewünschten Zeolith-Typ abzustellen ist. So kann die Fälltemperatur beim Schritt (a) für die Herstellung von Zeolith vom Faujasit-Typ beispielsweise bei 20 °C und für die Herstellung von Zeolith vom Typ P beispielsweise bei 70 °C liegen.

Die Menge der beim Fällungsschritt (a) jeweils einzusetzenden Reaktionskomponenten, d.h. die Ansatzstöchiometrie, richtet sich primär nach der Zeolith-Art, die beim erfindungsgemäßen Verfahren hergestellt werden soll. Mit anderen Worten heißt dies, daß die jeweilige Ansatzstöchiometrie für den Fachmann leicht aus der vorstehenden allgemeinen Formel (I) für den jeweiligen Zeolith-Typ errechenbar ist. Beispielhaft seien nachstehend Werte der Ansatzstöchiometrie für die erfindungsgemäß bevorzugt herzustellenden Zeolith-Typen angegeben:

- Zeolith A: $4,2 Na_2O : Al_2O_3 : 2 \quad SiO_2 : 100 H_2O$,
- Faujasit (Zeolith X): $4,56 Na_2O : Al_2O_3 : 3 \quad SiO_2 : 223 H_2O$,
- Zeolith P: $4,32 Na_2O : Al_2O_3 : 2,3 SiO_2 : 182 H_2O$.

Erfindungsgemäß sollen die beiden Reaktionskomponenten - wassergelöstes Alkalimetallsilicat und wassergelöstes Alkalimetallaluminat - in Gegenwart einer stöchiometrisch überschüssigen Menge an wassergelöstem Alkalimetallhydroxid miteinander vermischt werden. Die vorstehend angegebenen Werte zur Ansatzstöchiometrie bezüglich der erfindungsgemäß bevorzugten Zeolith-Typen schließen diesen Überschuß an Alkalimetallhydroxid - hier in Form von $Na_2O$ - bereits ein. Im allgemeinen sollte dieser Alkali-Überschuß, bezogen auf $Na_2O$, 4 bis 5 Mol $Na_2O$ auf 1 Mol $Al_2O_3$ bzw. 2 Mol $SiO_2$ betragen.

Wie vorstehend bereits ausgeführt, ist es im Sinne des erfindungsgemäßen Verfahrens nicht von Bedeutung, ob eine der beiden Reaktionskomponenten im Unterschuß, bezogen auf die stöchiometrisch erforderliche Menge, oder beide Reaktionskomponenten in der stöchiometrisch erforderlichen Menge eingesetzt werden, wobei hier natürlich das Nachdosieren der jeweiligen Reaktionskomponenten während des Kristallisationsschrittes zu berücksichtigen ist. Prinzipiell kann im Sinne der vorliegenden Erfindung beim Vermischen der Reaktionskomponenten gemäß Schritt (A) sowohl die Aluminat- als auch die Silikat-Komponente - zusammen mit der wäßrigen Alkalimetallhydroxid-Lösung - vorgelegt und die jeweils andere Komponente zugefügt werden. Im Sinne der vorliegenden Erfindung ist es jedoch bevorzugt, daß man beim Vermischen der Reaktionskomponenten gemäß Schritt (a) Alkalimetallsilicat in der stöchiometrisch erforderlichen Menge vorlegt und Alkalimetallaluminat entweder in stöchiometrischem Unterschuß oder aber in der stöchiometrisch erforderlichen Menge zufügt, wobei dann in Schritt (d), d.h. während der Kristallisation, Alkalimetallaluminat nachdosiert wird. Diese Verfahrensweise erweist sich im Hinblick auf ein möglichst enges Teilchengrößenspektrum der gewonnenen Zeolith-Kristalle und eine möglichst geringe mittlere Teilchengröße derselben als vorteilhaft.

Das Vermischen der Reaktionskomponenten sollte unter "starkem Rühren" der wäßrigen Lösungen erfolgen, um eine gute Vermischung der Lösungen zu gewährleisten. Der Begriff "starkes Rühren" ist mithin dahingehend auszulegen, daß ein gründliches und vollständiges Vermischen der wäßrigen Lösungen beim Fällungsschritt (a) resultiert.

Der Schritt (b) läßt sich als "Formieren" oder "Altern", bezogen auf das beim Fällungsschritt (a) primär gebildete amorphe Gel, definieren. Wesentlich sind auch hierbei zwei Parameter, nämlich die Dauer dieses Alterungsschrittes und die Temperatur des Reaktionsgemisches. Die Dauer des Alterungsschrittes soll erfindungsgemäß im Bereich von 5 bis 40 Minuten, vorzugsweise im Bereich von 10 bis 30 Minuten, liegen. Die Temperatur des Reaktionsgemisches wird hierbei gleich derjenigen gehalten, die auch für den Fällungsschritt (a) jeweils gewählt wurde. Die Auswahl einer zu kurzen Formierzeit kann die Bildung von Zeolithen mit einer zu großen mittleren Teilchengröße bedingen; eine zu lange Formierzeit ist andererseits im Hinblick auf die erfindungsgemäß angestrebte hohe Raum/Zeit-Ausbeute unerwünscht. Während des Schrittes (b) sollte das Reaktionsgemisch gleichfalls unter Rühren in Bewegung gehalten werden.

Im Anschluß an den Alterungsschritt (b) wird das Reaktionsgemisch im Verlaufe von 5 bis 30 Minuten, vorzugsweise im Verlauf von 5 bis 20 Minuten, von der beim Schritt (b) gewählten Temperatur auf die gewünschte Kristallisationstemperatur unter Rühren erhitzt. Die Kristallisationstemperatur liegt erfindungsgemäß im Temperaturbereich von mehr als 70 °C bis hin zum Siedepunkt des jeweiligen Reaktionsgemisches, wobei hier - in Abhängigkeit vom jeweils angestrebten Zeolith-Typ - Kristallisationstemperaturen im Bereich von 80 bis 100 °C, vorzugsweise im Bereich von 80 bis 90 °C, bevorzugt sind. Auch die Dauer des Aufheizens gemäß Schritt (c) ist abhängig vom jeweils angestrebten Zeolith-Typ. So kann beispielsweise für die Herstellung von Zeolith A die Dauer des Aufheizens relativ kurz sein, beispielsweise 5 Minuten, wohingegen für Zeolithe vom Faujasit-Typ eine längere Dauer des Aufheizens, beispielsweise 20 Minuten, von Vorteil ist.

Mit Erreichen der Kristallisationstemperatur beginnt die Kristallisation des primär gebildeten amorphen Alkalimetallaluminiumsilicat-Gels gemäß Kristallisationsschritt (d). Die Dauer dieses Kristallisationsschrittes sollte keinesfalls 10 Minuten unterschreiten. Die maximale Dauer des Kristallisationsschrittes ist hingegen von jeweilig angestrebten Zeolith-Typ abhängig. Für die einzelnen Zeolith-Typen können hier beispielsweise die folgenden Richtwerte angegeben werden: Zeolith A: maximal 8 Stunden, Zeolithe vom Faujasit-Typ: maximal 2 Tage, Zeolith P: maximal 3 Tage. Generell gilt hier, daß die Kristallisation vorteilhafterweise in dem Zeitpunkt unterbrochen wird, in dem der angestrebte Zeolith sein maximales Calciumbindevermögen erreicht hat. Die Bestimmung des Calciumbindevermögens wird nachträglich noch im einzelnen erörtert. Vom jeweils angestrebten Zeolith-Typ ist es ferner abhängig, ob das Reaktionsgemisch während der Kristallisation gerührt wird oder nicht. Bei der Herstellung von Zeolithen vom Typ A bzw. vom Typ P ist im allgemeinen ein Rühren während der Kristallisation von Vorteil, wohingegen bei der Herstellung von Zeolithen vom Faujasit-Typ ein Rühren des Reaktionsgemisches während der Kristallisation vorteilhafterweise unterbleibt.

Der erfindungsgemäße Schritt (e) betrifft das "Nachdosieren" einer der beiden Reaktionskomponenten während des Kristallisationsschrittes. Erfindungsgemäß werden hierbei 2 bis 50 Mol-%, vorzugsweise 5 bis 30 Mol-%, mindestens einer der beiden Reaktionskomponenten, bezogen auf die bereits im Fällungsschritt (a) jeweils eingesetzte Menge der Reaktionskomponenten, dem Reaktionsgemisch während des Kristallisationsschrittes zugesetzt. In Abhängigkeit von der im Fällungsschritt (a) eingesetzten Menge der jeweiligen Reaktionskomponenten dient dieses Nachdosieren entweder zum Ausgleich des stöchiometrischen Unterschusses, sofern im Schritt (a) die jeweilige Reaktionskomponente im stöchiometrischen Unterschuß eingesetzt worden ist. Andererseits kann dieses Nachdosieren aber erfindungsgemäß auch im stöchiometrischen Überschuß erfolgen, sofern die Reaktionskomponenten im Fällungsschritt (a) bereits in der stöchiometrisch erforderlichen Menge miteinander vermischt worden sind. Im Sinne der vorliegenden Erfindung kann sowohl die Silicat-Komponente als auch die Aluminat-Komponente gemäß Schritt (d) dem Reaktionsgemisch während der Kristallisation zugefügt werden. Ferner ist es grundsätzlich auch möglich, beide Reaktionskomponenten gemäß Schritt (e) nachzudosieren, wobei hier gleichfalls die vorstehend angegebenen Mengen in Mol-% zu berücksichtigen sind. Im Sinne der vorliegenden Erfindung ist es bevorzugt, daß - wie vorstehend bereits ausgeführt - die Silicat-Komponente beim Fällungsschritt (a) in der stöchiometrisch erforderlichen Menge vorgelegt und die Aluminat-Komponente in Schritt (e) - entweder zum Ausgleich des stöchiometrischen Unterschusses oder als stöchiometrischer Überschuß - zugefügt wird. Die Nachdosierung der Aluminat-Komponenten führt insbesondere bei der Herstellung von Zeolithen vom Typ A zu sehr geringen mittleren Teilchengrößen. Demgemäß ist eine weitere bevorzugte Ausführungsform des erfindungsgemäßen Verfahrens dadurch gekennzeichnet, daß die erhaltenen kristallinen Zeolithe vom Typ A eine mittlere Teilchengröße von weniger als 3 $\mu$m, angegeben als $d_{50}$-Wert, aufweisen.

Der Zeitpunkt des Nachdosierens einer der beiden Reaktionskomponenten während der Kristallisation kann sich generell auf die gesamte Dauer der Kristallisation erstrecken, wobei man vorteilhafterweise nicht unmittelbar nach Beginn des Kristallisationsschrittes mit dem Nachdosieren beginnt. Der optimale Zeitpunkt des Nachdosierens liegt erfindungsgemäß im Bereich von 25 bis 75 % der insgesamt erforderlichen Kristallisationszeit, wobei auch dies vom jeweilig angestrebten Zeolith-Typ abhängt.

Das erfindungsgemäße Verfahren läßt sich prinzipiell sowohl diskontinuierlich als auch kontinuierlich durchführen, wobei hierzu auf die für die Zeolith-Herstellung im Stand der Technik bereits ausführlich beschriebenen Reaktionsaggregate, beispielsweise offene oder geschlossene Reaktionsbehälter, Rührkesselkaskaden, Rührkolonnen oder Rohrreaktoren, verwiesen wird.

Die nach dem erfindungsgemäßen Verfahren hergestellten Zeolithe lassen sich beispielsweise als Molekularsiebe, Katalysatoren, Sorbentien oder als Zusatz zu keramischen Fritten und Glasuren verwenden. Im Hinblick auf die besonders geringen mittleren Teilchengrößen und das sehr hohe Kationenaustauschvermögen werden die gewonnenen Zeolithe, insbesondere Zeolithe vom Typ A, als Builderstoffe für Wasch-, Spül- und Reinigungsmittel eingesetzt.

<u>Bestimmung der Kennzahlen</u>

Die nach dem erfindungsgemäßen Verfahren hergestellten Zeolithproben wurden durch die folgenden Untersuchungen charakterisiert:

1) Bestimmung der Zusammensetzung der "Mutterlauge"
2) Glühverlust der getrockneten Zeolithpulver
3) Calciumbindevermögen (CaBV)
4) Teilchengrößenverteilung (TGV)
5) Röntgenbeugungsanalyse (RBA)

Zu 1:

Nach beendeter Kristallisation wird das Filtrat, das bei der Abtrennung des Zeoliths vom Reaktionsgemisch verbleibt, aufgefangen und mit Hilfe des Titro-Processors 636 der Fa. Metrohm titriert.

Man bestimmt damit den prozentualen Restgehalt an $Al_2O_3$, NaOH und $SiO_2$ in der Lösung.

Zu 2:

Ca. 0,5g der bei 110°C getrockneten Zeolith-Probe werden auf der Analysenwaage in vorher bis zur Gewichtskonstanz geglühte Porzellantiegel eingewogen und 1 h bei 800°C im Muffelofen geglüht. Der Gewichtsverlust gibt Aufschluß über den Gehalt an Aktivsubstanz (AS) (= Gew.-% Glührückstand) in der jeweiligen Probe.

Zu 3:

Die im Umlufttrockenschrank bei 110°C getrocknete Probe wird, bezogen auf den ermittelten Glühverlust, so eingewogen, daß die Einwaage 200 mg der Aktivsubstanz entpricht. Zu der Einwaage werden nun 200 ml einer $CaCl_2$-Lösung, die 30°d entspricht, zugegeben, und 10 Minuten bei Raumtemperatur bei einer Rührgeschwindigkeit von 400 U/Min. gerührt. Sofort anschließend werden die Proben über eine Glasfilternutsche, welche zusätzlich mit einem Glasfaserfilter versehen wird, klar filtriert.

Zu 100 ml des Filtrats werden eine Indikator-Puffertablette der Fa. Merck zur Bestimmung der Wasserhärte und 5 ml ca. 35 Gew.-%iger Ammoniaklösung zugegeben. Mit einer n/28 Komplexon[R] Lösung (1 ml = 1 mg CaO) wird dann bis zum Farbumschlag von rot nach grün titriert. Der Gehalt der eingesetzten $CaCl_2$-Lösung (30 °d) wird zuvor durch gleiche Titration (ohne Zugabe der Testsubstanz) bestimmt und entspricht dem "Blindwert" (BW).

$$\text{Berechnung: } \frac{(\text{BW - Verbrauch}) \times 2}{\text{Einwaage in g AS}} = \text{mg CaO / g AS}$$

Zu 4:

Die Teilchengrößenverteilung (TGV) wurde mit dem Gerät Sympatec Helos[R] der Fa. Sympatec bestimmt, und gibt Aufschluß über die Größe der gebildeten Kristalle. Vermessen wurde jeweils eine feuchte Probe des Zeolith-Filterkuchens, ausgewaschen (pH 10), und eine trockene Probe (Trocknung des Feststoffs bei 110°C im Umlufttrockenschrank). Die TGV wird in um angegeben.

Der angegebene Wert "$d_{50}$" bedeutet dabei, daß 50 Gew.-% der vermessenen Teilchen einen kleineren Durchmesser als der genannte Wert in $\mu$m besitzen. Für die Werte "$d_{80}$", $d_{90}$" und $d_{100}$ gilt das Entsprechende. Unter "$d_{max}$" versteht in die Teilchengröße, für die gerade kein Partikel mehr nachgewiesen werden kann, d.h. alle Partikel sind kleiner als der angegebene Wert.

Die Kennzahl "% > 10,5 $\mu$m" bedeutet beispielsweise einen entsprechenden Anteil an Probenmaterial, der eine Teilchengröße oberhalb 10,5 $\mu$m besitzt.

Zu 5:

Die Röntgenbeugungsanalyse (RBA) wurde mit dem Diffraktometer D 500 der Fa. Siemens durchgeführt und ist ein Maßstab für die Kristallinität der synthetisierten Produkte.

**Beispiele**

Für die nachstehenden Beispiele wurden jeweils die folgenden wäßrigen Lösungen als Reaktionskomponenten eingesetzt:

- Wäßrige Natriumsilicatlösung mit einem Gehalt von 26,9 Gew.-% $SiO_2$ und 8 Gew.-% $Na_2O$, 34,9 Gew.-% Gesamtfeststoff, Molverhältnis $SiO_2$:$Na_2O$ = 3,46:1 (Natronwasserglas 37/40 der Henkel KGaA).
- Wäßrige Natriumaluminatlösung mit einem Gehalt von 11,35 Gew.-% $Al_2O_3$ und 13,5 Gew.-% $Na_2O$.
- Wäßrige Natronlauge, 25 Gew.-%ig.

Die jeweiligen Einsatzmengen ergeben sich aus der in den einzelnen Beispielen angegebenen Ansatzstöchiometrie sowie den erläuternden Angaben hierzu.

Beispiel 1

Herstellung von Zeolith NaA, Silicat-Nachdosierung

Ansatzstöchiometrie: 4,2 $Na_2O$ : $Al_2O_3$ : 2 $SiO_2$ : 100 $H_2O$

Vorgelegt wurden die wäßrige Natriumsilicatlösung und die wäßrige Natronlauge. Die Natriumaluminatlösung wurde unter Rühren zu diesen Lösungen hinzugefügt. Anschließend wurde das ausgefällte Natriumaluminiumsilicat-Gel unter Rühren bei der Temperatur des Fällungsschrittes (= Vermischen) belassen (= Altern, Formieren), dann auf Kristallisationstemperatur erhitzt und bei dieser Temperatur zur Kristallisation gebracht.

Ansatz (1a) - siehe die Tabellen - dient als Vergleich, hierbei wurde die gesamte stöchiometrisch erforderliche Menge an Natriumsilicat vorgelegt. Bei allen anderen Ansätzen (1b) bis (1g) wurde die Natriumsilicatlösung nur in stöchiometrischem Unterschuß, bezogen auf die gemäß Ansatzstöchiometrie erforderliche Gesamtmenge an Silicat, vorgelegt und die jeweils verbliebene Restmenge erst im Verlauf des Kristallisationsschrittes zugegeben.

Bei allen Ansätzen wurden die folgenden Parameter konstant gehalten:

Zugabezeit der Aluminatlösung: 2 Minuten (= Dauer des Vermischens),
Fälltemperatur: 60 °C (= Temperatur während des Vermischens),
Formierdauer: 10 Minuten,
Dauer des Aufheizens auf Kristallisationstemperatur: 5 Minuten,
Kristallisationstemperatur: 85 °C,
Dauer der Kristallisation: 60 Minuten, unter Rühren.

Tabelle I zeigt die jeweils während der Kristallisation zugegebene Menge an Silicat in Prozent, bezogen auf 100 % der stöchiometrisch erforderlichen Gesamtmenge, sowie den Zeitpunkt des Nachdosierens, bezogen auf den Zeitpunkt, an dem die Kristallisationstemperatur erreicht war.

Tabelle II zeigt die Kennzahlen der aus diesen Ansätzen resultierenden Zeolithe vom Typ NaA. Ein Absinken der mittleren Teilchengröße der Zeolithe - bedingt durch die Silicat-Nachdosierung - ist hieraus ersichtlich.

Tabelle III zeigt die Zusammensetzung der bei den Ansätzen resultierenden Mutterlaugen bezüglich des Gehaltes an $SiO_2$ und $Al_2O_3$. Hieraus ist zu ersehen, daß der $Al_2O_3$-Gehalt der Mutterlaugen auf weniger als die Hälfte des Ansatzes (1a) absinkt.

Tabelle I

| Ansatz-Nr. | Menge Silicat nachdosiert | Zugabezeitpunkt |
|---|---|---|
| 1a* | 0 % | 0 min |
| 1b | 5 % | 15 min |
| 1c | 10 % | 5 min |
| 1d | 10 % | 10 min |
| 1e | 10 % | 15 min |
| 1f | 10 % | 20 min |
| 1g | 10 % | 25 min |

* Vergleichsbeispiel

Tabelle II

| Ansatz-Nr. | CaBV | $d_{50}$ [µm] | $d_{max}$ [µm] | Kristallinität |
|---|---|---|---|---|
| 1a* | 161 | 4,70 | 32,5 | hoch, NaA |
| 1b | 161 | 3,93 | 28,6 | hoch, NaA |
| 1c | 162 | 3,71 | 28,2 | hoch, NaA |
| 1d | 165 | 3,78 | 26,5 | hoch, NaA |
| 1e | 164 | 3,96 | 23,5 | hoch, NaA |
| 1f | 163 | 3,68 | 17,3 | hoch, NaA |
| 1g | 163 | 3,67 | 23,5 | hoch, NaA |

\* Vergleichsbeispiel

Tabelle III

| Ansatz-Nr. | Gehalt $SiO_2$ [Gew.-%] | Gehalt $Al_2O_3$ [Gew.-%] |
|---|---|---|
| 1a* | 0,28 | 0,38 |
| 1b | 0,31 | 0,29 |
| 1c | 0,27 | 0,26 |
| 1d | 0,28 | 0,24 |
| 1e | 0,26 | 0,19 |
| 1f | 0,28 | 0,18 |
| 1g | 0,28 | 0,16 |

\* Vergleichsbeispiel

Beispiel 2

Herstellung von Zeolith NaA, Silicat-Nachdosierung

Die Ansätze dieses Beispiels zeigen, daß das Prinzip der Silicat-Nachdosierung während des Kristallisationsschrittes auch dann zu positiven Effekten führt, wenn man von der Ansatzstöchiometrie gemäß Beispiel 1 insgesamt abweicht. Bei diesen Ansätzen wurde nämlich Natriumsilicatlösung in stöchiometrischem Überschuß, bezogen auf die gemäß Ansatzstöchiometrie nach Beispiel 1 erforderliche Gesamtmenge an Silicat, im Verlauf des Kristallisationsschrittes zugegeben.

Bei allen Ansätzen erfolgte die Fällung - Vermischen der Reaktionskomponenten - gemäß der in Beispiel 1 angegebenen Ansatzstöchiometrie, wobei hier jedoch die insgesamt erforderliche Menge an Silicat bereits bei der Fällung eingesetzt wurde. Während des Kristallisationsschrittes wurde jeweils Natriumsilicatlösung in stöchiometrischem Überschuß, bezogen auf die gemäß Ansatzstöchiometrie erforderliche Gesamtmenge an Silicat, zugegeben, so daß am Ende der Kristallisation das molare Verhältnis $Al_2O_3$:$SiO_2$ bei Werten von kleiner als 1:2 lag.

Alle übrigen Parameter wurden analog den Angaben in Beispiel 1 konstant gehalten.

Tabelle IV zeigt die während der Kristallisation zugegebene überschüssige Menge an Silicat in Prozent, bezogen auf 100 % der stöchiometrisch erforderlichen Gesamtmenge, sowie den Zugabezeitpunkt nach Beginn der Kristallisation.

Die Aussagen der Tabellen V und VI - bezüglich Kennzahlen und Mutterlaugen - entsprechen denjenigen der Tabellen II und III. Hieraus ist ersichtlich, daß auch bei Nachdosieren eines Silicat-Überschusses sowohl die mittlere Teilchengröße der Zeolithe als auch der $Al_2O_3$-Gehalt der Mutterlaugen abnehmen.

Tabelle IV

| Ansatz-Nr. | Menge Silicat-Überschuß, nachdosiert | Zugabezeitpunkt |
|---|---|---|
| 2a | 5 % | 15 min. |
| 2b | 5 % | 25 min. |
| 2c | 5 % | 35 min. |
| 2d | 10 % | 15 min. |

Tabelle V

| Ansatz-Nr. | CaBV | $d_{50}$ [μm] | $d_{max}$ [μm] | Kristallinität |
|---|---|---|---|---|
| 2a | 162 | 3,89 | 17,4 | hoch, NaA |
| 2b | 161 | 3,34 | 17,4 | hoch, NaA |
| 2c | 163 | 3,06 | 17,4 | hoch, NaA |
| 2d | 162 | 3,74 | 17,4 | hoch, NaA |

Tabelle VI

| Ansatz-Nr. | Gehalt $SiO_2$ [Gew.-%] | Gehalt $Al_2O_3$ [Gew.-%] |
|---|---|---|
| 2a | 0,38 | 0,17 |
| 2b | 0,42 | 0,14 |
| 2c | 0,42 | 0,17 |
| 2d | 0,19 | 0,10 |

Beispiel 3

Herstelllung von Zeolith NaX (Faujasit), Silicat-Nachdosierung

Ansatzstöchiometrie: 4,56 $Na_2O$ : $Al_2O_3$ : 3 $SiO_2$ : 223 $H_2O$

Es wurde analog den Angaben in Beispiel 1 gearbeitet. Ansatz (3a) dient wiederum als Vergleich; bei den Ansätzen (3b) und (3c) wurde die Natriumsilicatlösung gleichfalls nur in stöchiometrischem Unterschuß, bezogen auf die gemäß Ansatzstöchiometrie erforderliche Gesamtmenge an Silicat, vorgelegt und die verbliebenen Restmengen erst im Verlauf des Kristallisationsschrittes zugegeben. Die erhaltenen kristallinen Zeolithe wurde anschließend durch Filtration von der Mutterlauge abgetrennt, mit demineralisiertem Wasser auf pH 11 gewaschen und bei 110 °C getrocknet.

Bei allen Ansätzen wurden die folgenden Parameter konstant gehalten:

Zugabe der Aluminatlösung: 2 Minuten,
Fälltemperatur: 20 °C,
Formierdauer: 10 Minuten,
Dauer des Aufheizens auf Kristallisationstemperatur: 20 Minuten,

Kristallisationstemperatur: 80 °C,

Dauer der Kristallisation: 24 Stunden, ohne Rühren.

Tabelle VII zeigt die jeweils während der Kristallisation - unter intensivem Durchmischen für die Dauer von 1 Minute - zugegebene Menge an Silicat in Prozent, bezogen auf 100 % der stöchiometrisch erforderlichen Gesamtmenge, sowie den Zugabezeitpunkt nach Beginn der Kristallisation.

Tabelle VIII zeigt die Kennzahlen der erhaltenen Zeolithe vom Typ NaX sowie den Gehalt der Mutterlaugen an $SiO_2$ und $Al_2O_3$ (jeweils in Gew.-%).

Tabelle VII

| Ansatz-Nr. | Menge Silicat, nachdosiert | Zugabezeitpunkt |
|---|---|---|
| 3a* | 0 % | 0 |
| 3b | 10 % | 2 Stunden |
| 3c | 10 % | 6 Stunden |

* Vergleichsbeispiel

Tabelle VIII

| Ansatz-Nr. | CaBV | $d_{50}$ [µm] | $d_{max}$ [µm] | Kristallinität | Mutterlaugen | |
|---|---|---|---|---|---|---|
| | | | | | % $SiO_2$ | % $Al_2O_3$ |
| 3a* | 114 | 8,35 | 103 | hoch, NaX | 0,40 | 0,38 |
| 3b | 123 | 4,77 | 51 | hoch, NaX | 0,90 | 0,16 |
| 3c | 122 | 4,35 | 36 | hoch, NaX | 1,02 | 0,18 |

*Vergleichsbeispiel

## Beispiel 4

Herstellung von Zeolithen des P-Typs, Silicat-Nachdosierung

Ansatzstöchiometrie: 4,32 $Na_2O$ : $Al_2O_3$ : 2,3 $SiO_2$ : 182 $H_2O$

Die Durchführung der Ansätze dieses Beispiels erfolgte analog den Angaben im vorstehenden Beispiel 3.

Bei allen Ansätzen wurden die folgenden Parameter konstant gehal

ten. Zugabezeit der Aluminatlösung: 2 Minuten,

Fälltemperatur: 70 °C,

Formierdauer: 10 Minuten,

Dauer des Aufheizens auf Kristallisationstemperatur: 10 Minuten,

Kristallisationstemperatur: 90 °C,

Dauer der Kristallisation: 6 Stunden, unter Rühren.

Die Angaben in den Tabellen IX und X entsprechen sinngemäß denjenigen der Tabellen VII und VIII.

Tabelle IX

| Ansatz-Nr. | Menge Silicat, nachdosiert | Zugabezeitpunkt |
|---|---|---|
| 4a* | 0 % | 0 |
| 4b | 10 % | 1,5 Stunden |
| 4c | 10 % | 5 Stunden |

* Vergleichsbeispiel

Tabelle X

| Ansatz-Nr. | CaBV | $d_{50}$ [μm] | $d_{max}$ [μm] | Kristallinität | Mutterlaugen | |
|---|---|---|---|---|---|---|
| | | | | | % $SiO_2$ | % $Al_2O_3$ |
| 4a* | 120 | 2,00 | 12,5 | hoch, $P_c + P_t$ | 0,86 | 0,43 |
| 4b | 132 | 1,39 | 5 | hoch, $P_c + P_t$ | 1,25 | 0,23 |
| 4c | 137 | 1,73 | 5 | hoch, $P_c + P_t$ | 1,19 | 0,19 |

* Vergleichsbeispiel

Beispiel 5

Herstellung von Zeolith NaA, Aluminat-Nachdosierung

Ansatzstöchiometrie: 4,2 $Na_2O$ : $Al_2O_3$ : 2 $SiO_2$ : 100 $H_2O$

Durchführung der Ansätze analog Beispiel 1 mit dem Unterschied, daß in Beispiel 5 - zusammen mit der wäßrigen Natronlauge - die wäßrige Natriumsilicatlösung in der stöchiometrisch erforderlichen Menge vorgelegt wurde. Stattdessen wurde in Beispiel 5 - Ansätze (5b) bis (5p) - die wäßrige Natriumaluminatlösung während des Fällungsschrittes nur in stöchiometrischem Unterschuß, bezogen auf die gemäß Ansatzstöchiometrie erforderliche Gesamtmenge an Aluminat, zugegeben und die jeweils verbliebene Restmenge erst im Verlauf des Kristallisationsschrittes nachdosiert. Ansatz (5a) dient auch hier wieder als Vergleich, d.h. es wurde die gesamte stöchiometrisch erforderliche Menge an Natriumaluminat bereits während des Fällungsschrittes zugegeben.

Bei allen Ansätzen wurden die folgenden Parameter konstant gehalten:

Zugabezeitpunkt der ersten Menge an Aluminatlauge beim Fällungs
schritt: 2 Minuten (= Dauer des Vermischens),
Fälltemperatur: 60 °C,
Formierdauer: 10 Minuten,
Dauer des Aufheizens auf Kristallisationstemperatur: 5 Minuten,
Kristallisationstemperatur: 85 °C,
Dauer der Kristallisation: 60 Minuten, unter Rühren.

Tabelle XI zeigt die jeweils während der Kristallisation zugegebene Menge an Aluminat in Prozent, bezogen auf 100 % der stöchiometrisch erforderlichen Gesamtmenge, sowie den Zeitpunkt des Nachdosierens, bezogen auf den Zeitpunkt, an dem die Kristallisationstemperatur erreicht war.

Tabelle XII zeigt die Kennzahlen der aus diesen Ansätzen resultierenden Zeolithe vom Typ NaA. Ein Absinken der mittleren Teilchengröße der Zeolithe - bedingt durch die Aluminat-Nachdosierung - ist hieraus ersichtlich.

Tabelle XIII zeigt die Zusammensetzung der bei den Ansätzen resultierenden Mutterlaugen bezüglich des Gehaltes an $SiO_2$ und $Al_2O_3$. Hieraus ist zu ersehen, daß der $SiO_2$-Gehalt der Mutterlaugen im Vergleich zu Ansatz (1a) stark absinkt.

Tabelle XI

| Ansatz-Nr. | Menge Aluminat, nachdosiert | Zugabezeitpunkt |
|---|---|---|
| 5a* | 0 % | 0 min |
| 5b | 30 % | jeweils 10 % nach 10, 20 und 30 min |
| 5c | 10 % | 10 min |
| 5d | 10 % | 15 min |
| 5e | 10 % | 20 min |
| 5f | 10 % | 23 min |
| 5g | 10 % | 26 min |
| 5h | 10 % | 30 min |
| 5i | 10 % | 34 min |
| 5k | 20 % | 20 min |
| 5l | 30 % | 20 min |
| 5m | 15 % | 20 min |
| 5n | 5 % | 20 min |
| 5o | 5 % | 27 min |
| 5p | 5 % | 33 min |

* Vergleichsbeispiel

Tabelle XII

| Ansatz-Nr. | CaBV | $d_{50}$ [μm] | $d_{max}$ [μm] | Kristallinität |
|---|---|---|---|---|
| 5a* | 161 | 4,08 | 32,5 | hoch, NaA |
| 5b | 158 | 3,28 | 28,6 | hoch, NaA |
| 5c | 169 | 3,49 | 33,5 | hoch, NaA |
| 5d | 172 | 2,85 | 33,0 | hoch, NaA |
| 5e | 167 | 3,15 | 28,2 | hoch, NaA |
| 5f | 166 | 3,08 | 26,5 | hoch, NaA |
| 5g | 164 | 2,96 | 23,5 | hoch, NaA |
| 5h | 172 | 2,88 | 17,3 | hoch, NaA |
| 5i | 168 | 3,27 | 23,5 | hoch, NaA |
| 5k | 168 | 3,66 | 23,5 | hoch, NaA |
| 5l | 169 | 3,43 | 17,4 | hoch, NaA |
| 5m | 167 | 3,89 | 27,5 | hoch, NaA |
| 5n | 168 | 3,81 | 17,4 | hoch, NaA |
| 5o | 167 | 2,90 | 17,4 | hoch, NaA |
| 5p | 166 | 3,21 | 17,4 | hoch, NaA |

* Vergleichsbeispiel

Tabelle XIII

| Ansatz-Nr. | Gehalt SiO$_2$ [Gew.-%] | Gehalt Al$_2$O$_3$ [Gew.-%] |
|---|---|---|
| 5a* | 0,36 | 0,29 |
| 5b | 0,12 | 0,45 |
| 5c | 0,37 | 0,15 |
| 5d | 0,25 | 0,16 |
| 5e | 0,22 | 0,17 |
| 5f | 0,18 | 0,24 |
| 5g | 0,16 | 0,24 |
| 5h | 0,16 | 0,28 |
| 5i | 0,15 | 0,33 |
| 5k | 0,20 | 0,30 |
| 5l | 0,20 | 0,30 |
| 5m | 0,19 | 0,28 |
| 5n | 0,19 | 0,29 |
| 5o | 0,16 | 0,33 |
| 5p | 0,14 | 0,36 |

* Vergleichsbeispiel

Beispiel 6

Herstellung von Zeolith NaA, Aluminat-Nachdosierung

Analog zu Beispiel 2 zeigen die Ansätze des Beispiels 6, daß das Prinzip der Aluminat-Nachdosierung während des Kristallisationsschrittes auch dann zu positiven Effekten führt, wenn man von der Ansatzstöchiometrie gemäß Beispiel 5 insgesamt abweicht. Bei den Ansätzen des Beispiels 6 wurde nämlich Natriumaluminatlösung in stöchiometrischem Überschuß, bezogen auf die gemäß Ansatzstöchiometrie nach Beispiel 5 erforderliche Gesamtmenge an Aluminat, im Verlauf des Kristallisationsschrittes zugegeben. Bei allen Ansätzen erfolgte die Fällung - Vermischen der Reaktionskomponenten - gemäß der in Beispiel 5 angegebenen Ansatzstöchiometrie, wobei hier jedoch die insgesamt erforderliche Menge an Aluminat bereits bei der Fällung eingesetzt wurde. Während des Kristallisationsschrittes wurde jeweils Natriumaluminatlösung im stöchiometrischen Überschuß, bezogen auf die gemäß Ansatzstöchiometrie erforderliche Gesamtmenge an Aluminat, zugegeben, so daß am Ende der Kristallisation das molare Verhältnis Al$_2$O$_3$ : SiO$_2$ bei Werten von größer als 1 : 2 lag.

Alle übrigen Parameter wurden analog den Angaben in Beispiel 5 konstant gehalten.

Tabelle XIV zeigt die während der Kristallisation zugegebene überschüssige Menge an Aluminat in Prozent, bezogen auf 100 % der stöchiometrisch erforderlichen Gesamtmenge, sowie den Zugabezeitpunkt nach Beginn der Kristallisation.

Die Aussagen der Tabellen XI und XVI - bezüglich Kennzahlen und Mutterlaugen - entsprechen denjenigen der Tabellen XII und XIII. Hieraus ist ersichtlich, daß auch bei Nachdosieren eines Aluminat-Überschusses sowohl die mittlere Teilchengröße der Zeolithe als auch der SiO$_2$-Gehalt der Mutterlaugen abnehmen.

Tabelle XIV

| Ansatz-Nr. | Menge Aluminat-Überschuß, nachdosiert | Zugabezeitpunkt |
|---|---|---|
| 6a | 3 % | 20 min |
| 6b | 4 % | 15 min |
| 6c | 4 % | 20 min |
| 6d | 4 % | 25 min |
| 6e | 4 % | 30 min |
| 6f | 5 % | 15 min |
| 6g | 5 % | 20 min |
| 6h | 5 % | 27 min |
| 6i | 5 % | 35 min |
| 6k | 6 % | 20 min |
| 6l | 7 % | 20 min |
| 6m | 8,5 % | 20 min |
| 6n | 10 % | 20 min |

Tabelle XV

| Ansatz-Nr. | CaBV | $d_{50}$ [$\mu$m] | $d_{max}$ [$\mu$m] | Kristallinität |
|---|---|---|---|---|
| 6a | 168 | 3,39 | 17,4 | hoch, NaA |
| 6b | 171 | 3,04 | 17,4 | hoch, NaA |
| 6c | 168 | 3,01 | 17,4 | hoch, NaA |
| 6d | 171 | 2,96 | 17,4 | hoch, NaA |
| 6e | 169 | 2,96 | 17,4 | hoch, NaA |
| 6f | 168 | 2,97 | 17,4 | hoch, NaA |
| 6g | 169 | 3,72 | 20,6 | hoch, NaA |
| 6h | 171 | 2,78 | 17,4 | hoch, NaA |
| 6i | 168 | 2,71 | 17,4 | hoch, NaA |
| 6k | 167 | 3,21 | 17,4 | hoch, NaA |
| 6l | 169 | 2,61 | 17,4 | hoch, NaA |
| 6m | 172 | 2,99 | 17,4 | hoch, NaA |
| 6n | 181 | 2,77 | 17,4 | hoch, NaA |

Tabelle XVI

| Ansatz-Nr. | Gehalt $SiO_2$ [Gew.-%] | Gehalt $Al_2O_3$ [Gew.-%] |
|---|---|---|
| 6a | 0,18 | 0,26 |
| 6b | 0,22 | 0,26 |
| 6c | 0,19 | 0,26 |
| 6d | 0,16 | 0,28 |
| 6e | 0,15 | 0,32 |
| 6f | 0,16 | 0,29 |
| 6g | 0,15 | 0,32 |
| 6h | 0,15 | 0,34 |
| 6i | 0,13 | 0,36 |
| 6k | 0,14 | 0,34 |
| 6l | 0,13 | 0,36 |
| 6m | 0,12 | 0,41 |
| 6n | 0,11 | 0,43 |

Beispiel 7

Herstellung von Zeolith NaX (Faujasit), Aluminat-Nachdosierung

Ansatzstöchiometrie: 4,56 $Na_2O$ : $Al_2O_3$ : 3 $SiO_2$ : 223 $H_2O$

Durchführung der Ansätze analog den Angaben in Beispiel 5. Ansatz (7a) dient als Vergleich; bei den Ansätzen (7b) und (7c) wurde die Natriumaluminatlösung gleichfalls nur in stöchiometrischem Unterschuß, bezogen auf die gemäß Ansatzstöchiometrie erforderliche Gesamtmenge an Aluminat, während des Fällungsschrittes zugegeben und die verbliebenen Restmengen erst im Verlauf des Kristallisationsschrittes nachdosiert. Die erhaltenen kristallinen Zeolithe wurden anschließend durch Filtration von der Mutterlauge abgetrennt, mit demineralisiertem Wasser auf pH 11 gewaschen und bei 110 °C getrocknet.

Bei allen Ansätzen wurden die folgenden Parameter konstant gehalten:

Zugabezeit der ersten Menge an Aluminatlauge beim Fällungsschritt:
2 Minuten (= Dauer des Vermischens),
Fälltemperatur: 20 °C,
Formierdauer: 10 Minuten,
Dauer des Aufheizens auf Kristallisationstemperatur: 20 Minuten,
Kristallisationstemperatur: 80 °C,
Dauer der Kristallisation: 24 Stunden, ohne Rühren.

Tabelle XVII zeigt die jeweils während der Kristallisation - unter intensivem Durchmischen für die Dauer von 1 Minute - zugegebene Menge an Aluminat in Prozent, bezogen auf 100 % der stöchiometrisch erforderlichen Gesamtmenge, sowie den Zugabezeitpunkt nach Beginn der Kristallisation.

Tabelle XVIII zeigt die Kennzahlen der erhaltenen Zeolithe vom Typ NaX sowie den Gehalt der Mutterlaugen an $SiO_2$ und $Al_2O_3$ (jeweils in Gew.-%).

Tabelle XVII

| Ansatz-Nr. | Menge Aluminat, nachdosiert | Zugabezeitpunkt |
|---|---|---|
| 7a* | 0 % | 0 |
| 7b | 10 % | 2 Stunden |
| 7c | 10 % | 6 Stunden |

*Vergleichsbeispiel

Tabelle XVIII

| Ansatz-Nr. | CaBV | $d_{50}$ [$\mu$m] | $d_{max}$ [$\mu$m] | Kristallinität | Mutterlaugen | |
|---|---|---|---|---|---|---|
| | | | | | %$SiO_2$ | %$Al_2O_3$ |
| 7a* | 114 | 8,35 | 103 | hoch, NaX | 1,02 | 0,18 |
| 7b | 123 | 5,52 | 51 | hoch, NaX | 0,62 | 0,23 |
| 7c | 121 | 5,23 | 36 | hoch, NaX | 0,15 | 0,15 |

* Vergleichsbeispiel

Beispiel 8

Herstellung von Zeolithen des P-Typs, Aluminat-Nachdosierung

Ansatzstöchiometrie: 4,32 $Na_2O$ : $Al_2O_3$ : 2,3 $SiO_2$ : 182 $H_2O$
Die Durchführung der Ansätze dieses Beispiels erfolgte analog den Angaben im vorstehenden Beispiel 7.
Bei allen Ansätzen wurden die folgenden Parameter konstant gehalten:

Zugabezeit der ersten Menge an Aluminatlauge beim Fällungsschritt: 2 Minuten,
Fälltemperatur: 70 °C,
Formierdauer: 10 Minuten,
Dauer des Aufheizens auf Kristallisationstemperatur: 10 Minuten,
Kristallisationstemperatur: 90 °C,
Dauer der Kristallisation: 6 Stunden, unter Rühren.

Die Angaben der Tabellen XIX und XX entsprechen sinngemäß denjenigen der Tabellen XVII und XVIII.

Tabelle XIX

| Ansatz-Nr. | Menge Aluminat, nachdosiert | Zugabezeitpunkt |
|---|---|---|
| 8a* | 0 % | 0 |
| 8b | 10 % | 1,5 Stunden |
| 8c | 10 % | 5 Stunden |

* Vergleichsbeispiel

Tabelle XX

| Ansatz-Nr. | CaBV | $d_{50}$ [µm] | $d_{max}$ [µm] | Kristallinität | Mutterlaugen | |
|---|---|---|---|---|---|---|
| | | | | | %$SiO_2$ | %$Al_2O_3$ |
| 8a* | 111 | 2,74 | 12,5 | hoch, Pc + Pt | 1,86 | 0,03 |
| 8b | 147 | 1,42 | 5 | hoch, Pc + Pt | 1,45 | 0,03 |
| 8c | 148 | 1,19 | 3,7 | hoch, Pc + Pt | 1,39 | 0,03 |

* Vergleichsbeispiel

Vergleichsbeispiel 9

Herstellung von Zeolith NaA, analog DE-A-30 07 123

Ansatzstöchiometrie: 4,2 $Na_2O$ : $Al_2O_3$ : 2 $SiO_2$ : 100 $H_2O$

Vorgelegt wurden 2 l Wasser. Bei einer Temperatur von 60 °C wurden im Verlauf von 10 Minuten unter starkem Rühren gleichzeitig 2 l Natriumaluminatlösung (188,5 g/l $Na_2O$ und 85 g/l $Al_2O_3$) und 2,8 l Natriumsilicatlösung (104 g/l $Na_2O$ und 356 g/l $SiO_2$) hinzugefügt. Das Reaktionsgemisch wurde bei der sich einstellenden Temperatur von 62 °C für 30 Minuten unter Rühren belassen. Anschließend wurden bei der gleichen Temperatur im Verlauf von 2 Stunden weitere 8 l Natriumaluminatlösung der vorstehend genannten Zusammensetzung und nachfolgend im Verlauf von 10 Minuten weitere 1,1 l Natriumsilicatlösung der vorstehend genannten Zusammensetzung nachdosiert. Das Reaktionsgemisch wurde dann auf 82 °C erhitzt und bei dieser Temperatur für 2 Stunden unter Rühren belassen. Während dieses Kristallisationsschrittes wurden zu unterschiedlichen Zeiten Proben des erhaltenen Produktes entnommen und charakterisiert.

Tabelle XXI zeigt die Kennzahlen der erhaltenen Produkte in Abhängigkeit von der Zeit der Probenentnahmen nach Erreichen der Kristallisationstemperatur. Hieraus ist ersichtlich, daß die Kristallisation erst bei der erhöhten Temperatur erfolgt, da nach beendeter Zugabe der letzten Teilmenge der Reaktionskomponenten Natriumsilicat nur ein amorphes Produkt vorliegt. Für die Ausbildung von kristallinem Material ist ein Nachrühren des Reaktionsgemisches über einen längeren Zeitraum unabdingbar.

Tabelle XXI

| Proben-Nr. | Zeit [min] | CaBV [g CaO/g AS] | d(m) [µm] | Kristallinität (Röntgenbeugung) |
|---|---|---|---|---|
| 9a | 0 | 42 | 28 | amorph |
| 9b | 30 | 44 | 27 | amorph |
| 9c | 60 | 68 | 22 | gering |
| 9d | 120 | 162 | 8,2 | hoch |

**Patentansprüche**

1. Verfahren zur Herstellung von feinstteiligen zeolithischen Alkalimetallaluminiumsilicaten der allgemeinen Formel (I)

$$x Me_2O \cdot Al_2O_3 \cdot y SiO_2 \cdot z H_2O \tag{I}$$

in der

Me     Natrium und/oder Kalium,

x     eine Zahl im Bereich von 0,8 bis 1,3,

y     eine Zahl im Bereich von 1,3 bis 10 und

z     eine Zahl im Bereich von 0 bis 6

bedeuten,

durch Vermischen der Reaktionskomponenten wassergelöstes Alkalimetallsilicat und wassergelöstes Alkalimetallaluminat in Gegenwart einer stöchiometrisch überschüssigen Menge an wassergelöstem Alkalimetallhydroxid, anschließendem Altern des erhaltenen Gels und Kristallisation,

dadurch gekennzeichnet, daß man

(a) die Reaktionskomponenten bei einer Temperatur im Bereich von 20 bis 70 °C im Verlauf von weniger als 10 Minuten unter starkem Rühren miteinander vermischt, wobei man entweder mindestens eine der beiden Reaktionskomponenten im Unterschuß, bezogen auf die stöchiometrisch erforderliche Menge, oder beide Reaktionskomponenten in der stöchiometrisch erforderlichen Menge einsetzt,

(b) das Reaktionsgemisch anschließend für eine Dauer im Bereich von 5 bis 40 Minuten bei der gemäß Schritt (a) eingestellten Temperatur unter Rühren beläßt,

(c) im Anschluß an den Alterungsschritt (b) das Reaktionsgemisch im Verlauf von 5 bis 30 Minuten auf eine Temperatur im Bereich von mehr als 70 °C bis zum Siedepunkt des Reaktionsgemisches unter Rühren erhitzt,

(d) das erhaltene amorphe Alkalimetallaluminiumsilicat-Gel bei der gemäß Schritt (c) eingestellten Temperatur während einer Dauer von mindestens 10 Minuten kristallisieren läßt,

(e) wobei man dem Reaktionsgemisch während des Kristallisationsschrittes (d) 2 bis 50 Mol-% mindestens einer der beiden Reaktionskomponenten, bezogen auf die bereits im Schritt (a) jeweils eingesetzte Menge der Reaktionskomponenten, entweder zum Ausgleich des stöchiometrischen Unterschusses oder als stöchiometrischer Überschuß zufügt.

2.  Verfahren nach Anspruch 1, dadurch gekennzeichnet, daß in der allgemeinen Formel (I) y eine Zahl

-  im Bereich von 1,35 bis 2,35 für Zeolithe vom Typ A,
-  im Bereich von 1,85 bis 3      für Zeolithe vom Typ P und
-  im Bereich von 2,5 bis 10     für Zeolithe vom Faujasit-Typ

bedeutet.

3.  Verfahren nach Anspruch 2, dadurch gekennzeichnet, daß die mittlere Teilchengröße der kristallinen Zeolithe, jeweils angegeben als $d_{50}$-Wert,

-  für Zeolithe vom Typ A kleiner als 4 $\mu$m,
-  für Zeolithe vom Typ P kleiner als 2 $\mu$m und
-  für Zeolithe vom Faujasit-Typ kleiner als 6 $\mu$m

beträgt.

4.  Verfahren nach einem oder mehreren der Ansprüche 1 bis 3, dadurch gekennzeichnet, daß das Alkalimetallkation des Alkalimetallsilicats und/oder des Alkalimetallaluminats ausgewählt ist aus Natrium und Kalium, mit der Maßgabe, daß wenigstens 50 Mol-% der Alkalimetallkationen im zeolithischen Alkalimetallaluminiumsilicat Natriumkationen sind.

5.  Verfahren nach einem oder mehreren der Ansprüche 1 bis 4, dadurch gekennzeichnet, daß man die Reaktionskomponenten im Schritt (a) bei einer Temperatur im Bereich von 40 bis 65 °C im Verlauf von weniger als 5 Minuten miteinander vermischt.

6.  Verfahren nach einem oder mehreren der Ansprüche 1 bis 4, dadurch gekennzeichnet, daß man das Reaktionsgemisch im Alterungsschritt (b) für eine Dauer im Bereich von 10 bis 30 Minuten bei der gemäß Schritt (a) eingestellten Temperatur unter Rühren beläßt.

7.  Verfahren nach einem oder mehreren der Ansprüche 1 bis 4, dadurch gekennzeichnet, daß man das Reaktionsgemisch im Anschluß an den Alterungsschritt (b) im Verlauf von 5 bis 20 Minuten auf die Kristallisationstemperatur im Bereich von mehr als 70 °C bis zum Siedepunkt des Reaktionsgemisches unter Rühren erhitzt.

**8.** Verfahren nach einem oder mehreren der Ansprüche 1 bis 4, dadurch gekennzeichnet, daß man dem Reaktionsgemisch während des Kristallisationsschrittes (d) 5 bis 30 Mol-% mindestens einer der beiden Reaktionskomponenten gemäß Schritt (e) zufügt.

**9.** Verfahren nach einem oder mehreren der Ansprüche 1 bis 8, dadurch gekennzeichnet, daß man beim Vermischen der Reaktionskomponenten gemäß Schritt (a) Alkalimetallsilicat in der stöchiometrisch erforderlichen Menge vorlegt und Alkalimetallaluminat entweder in stöchiometrischem Unterschuß oder in der stöchiometrisch erforderlichen Menge zufügt und in Schritt (e) Alkalimetallaluminat nachdosiert.

**10.** Verfahren nach Anspruch 9, dadurch gekennzeichnet, daß die erhaltenen kristallinen Zeolithe vom Typ A eine mittlere Teilchengröße von weniger als 3 $\mu$m, angegeben als $d_{50}$-Wert, aufweisen.

**Claims**

**1.** A process for the production of very fine-particle zeolitic alkali metal aluminium silicates corresponding to general formula (I):

$$x\,Me_2O \cdot Al_2O_3 \cdot y\,SiO_2 \cdot z\,H_2O \hspace{3cm} (I)$$

in which

Me   is sodium and/or potassium,
x     is a number of 0.8 to 1.3,
y     is a number of 1.3 to 10 and
z     is a number of 0 to 6,

by mixing of the reaction components, alkali metal silicate dissolved in water and alkali metal aluminate dissolved in water, in the presence of more than the stoichiometric quantity of alkali metal hydroxide dissolved in water, subsequent ageing of the gel obtained and crystallization, characterized in that

(a) the reaction components are mixed together with intensive stirring over a period of less than 10 minutes at a temperature in the range from 20 to 70°C, at least one of the two reaction components being used in less than the stoichiometrically necessary quantity or both reaction components being used in the stoichiometrically necessary quantity,
(b) the reaction mixture is stirred for 5 to 40 minutes at the temperature established in step (a),
(c) after the ageing step (b), the reaction mixture is heated with stirring for 5 to 30 minutes to a temperature of more than 70°C to the boiling point of the reaction mixture,
(d) the amorphous alkali metal aluminium silicate gel obtained is allowed to crystallize for at least 10 minutes at the temperature established in step (c),
(e) 2 to 50 mole-% of at least one of the two reaction components, based on the quantity of the reaction components already used in step (a), being added to the reaction mixture during the crystallization step (d) either to make up the balance to the stoichiometrically necessary quantity or as a stoichiometric excess.

**2.** A process as claimed in claim 1, characterized in that, in general formula (I), y is a number

- in the range from 1.35 to 2.35 for zeolites of the A type,
- in the range from 1.85 to 3 for zeolites of the P type and
- in the range from 2.5 to 10 for zeolites of the faujasite type.

**3.** A process as claimed in claim 2, characterized in that the average particle size of the crystalline zeolites, expressed as the $d_{50}$ value, is

- less than 4 $\mu$m for zeolites of A type,
- less than 2 $\mu$m for zeolites of P type and
- less than 6 $\mu$m for zeolites of the faujasite type.

**4.** A process as claimed in one or more of claims 1 to 3, characterized in that the alkali metal cation of the alkali metal silicate and/or the alkali metal aluminate is selected from sodium and potassium, with the proviso that at least 50 mole-% of the alkali metal cations in the zeolitic alkali metal aluminium silicate are sodium cations.

**5.** A process as claimed in one or more of claims 1 to 4, characterized in that, in step (a), the reaction components are mixed together over a period of less than 5 minutes at a temperature in the range from 40 to 65°C.

**6.** A process as claimed in one or more of claims 1 to 4, characterized in that, in the ageing step (b), the reaction mixture is stirred for 10 to 30 minutes at the temperature established in step (a).

**7.** A process as claimed in one or more of claims 1 to 4, characterized in that, after the ageing step (b), the reaction mixture is heated with stirring for 5 to 20 minutes to the crystallization temperature in the range from > 70°C to the boiling point of the reaction mixture.

**8.** A process as claimed in one or more of claims 1 to 4, characterized in that 5 to 30 mole-% of at least one of the two reaction components according to step (e) is added to the reaction mixture during the crystallization step (d).

**9.** A process as claimed in one or more of claims 1 to 8, characterized in that, during the mixing of the reaction components in step (a), alkali metal silicate is initially introduced in the stoichiometrically necessary quantity and alkali metal aluminate is added either in less than the stoichiometric quantity or in the stoichiometrically necessary quantity and alkali metal aluminate is replenished in step (e).

**10.** A process as claimed in claim 9, characterized in that the crystalline zeolites of the A type obtained have an average particle size of less than 3 $\mu$m expressed as the $d_{50}$ value.

**Revendications**

**1.** Procédé de préparation d'aluminosilicates de métaux alcalins zéolithiques finement pulvérisés de la formule générale (I)

$$x \, Me_2O \cdot Al_2O_3 \cdot y \, SiO_2 \cdot z \, H_2O \tag{I}$$

dans laquelle

Me     représente le sodium et/ou le potassium
x       correspond à un nombre dans l'intervalle de 0,8 à 1,3,
y       est égal à un nombre dans l'intervalle de 1,3 à 10 et
z       représente un nombre dans l'intervalle de 0 à 6,

par mélangeage des composants réactionnels, silicate de métal alcalin dissous dans l'eau et aluminate de métal alcalin dissous dans l'eau, en présence d'une quantité en excès stoechiométrique d'hydroyxde de métal alcalin dissous dans l'eau, puis vieillissement du gel obtenu et cristallisation, caractérisé en ce qu'on

(a) mélange les composants réactionnels ensemble, à une température située dans l'intervalle de 20 à 70 °C, pendant une période inférieure à 10 minutes, sous forte agitation, en mettant en oeuvre soit au moins un des deux composants réactionnels en déficit, par rapport à la quantité stoechiométriquement requise, soit les deux composants réactionnels dans la quantité stoechiométriquement requise,
(b) maintient ensuite le mélange réactionnel sous agitation pendant une durée située dans l'intervalle de 5 à 40 minutes à la température réglée pour l'étape (a),
(c) suite à l'étape de vieillissement (b), chauffe le mélange réactionnel sous agitation, pendant une période de 5 à 30 minutes à une température située dans l'intervalle allant de plus de 70 °C jusqu'au point d'ébullition du mélange réactionnel,
(d) laisse se cristalliser le gel d'aluminosilicate de métal alcalin amorphe obtenu à la température réglée pour l'étape (c), pendant une période d'au moins 10 minutes,
(e) en ajoutant au mélange réactionnel au cours de l'étape de cristallisation (d) 2 à 50 moles % d'au moins un des composants réactionnels, par rapport à la quantité déjà mise en oeuvre dans l'étape (a), soit pour compenser le déficit stoechiométrique soit en excès stoechiométrique.

**2.** Procédé selon la revendication 1, caractérisé en ce que dans la formule générale (I), y représente un nombre situé

- dans l'intervalle de 1,35 à 2,35 pour les zéolithes de type A,
- dans l'intervalle de 1,85 à 3       pour les zéolithes de type P et
- dans l'intervalle de 2,5 à 10       pour les zéolithes de type faujasite.

3. Procédé selon la revendication 2, caractérisé en ce que la taille de particule moyenne, spécifiée chaque fois comme valeur $d_{50}$ des zéolithes cristallines obtenues, est

- inférieure à 4 $\mu$m pour les zéolithes de type A,
- inférieure à 2 $\mu$m pour les zéolithes de type P et
- inférieure à 6 $\mu$m pour les zéolithes du type faujasite.

4. Procédé selon une ou plusieurs des revendications 1 à 3, caractérisé en ce que le cation de métal alcalin du silicate et/ou de l'aluminate de métal alcalin est choisi entre le sodium et le potassium, à condition qu'au moins 50 moles % des cations de métaux alcalins dans l'aluminosilicate de métal alcalin zéolithique soient des cations de sodium.

5. Procédé selon une ou plusieurs des revendications 1 à 4, caractérisé en ce que l'on mélange ensemble les composants réactionnels dans l'étape (a), à une température comprise dans l'intervalle de 40 à 65 °C, pendant une durée inférieure à 5 minutes.

6. Procédé selon une ou plusieurs des revendications 1 à 4, caractérisé en ce que l'on laisse le mélange réactionnel dans l'étape de vieillissement (b) sous agitation à la température réglée pour l'étape (a), pendant une durée comprise dans l'intervalle de 10 à 30 minutes.

7. Procédé selon une ou plusieurs des revendications 1 à 4, caractérisé en ce qu'à la suite de l'étape de vieillissement (b), on chauffe le mélange réactionnel sous agitation, en l'espace de 5 à 20 minutes, à la température de cristallisation, comprise dans l'intervalle de plus de 70 °C jusqu'au point d'ébullition du mélange réactionnel.

8. Procédé selon une ou plusieurs des revendications 1 à 4, caractérisé en ce que l'on ajoute au mélange réactionnel, au cours de l'étape de cristallisation (d), 5 à 30 moles % d'au moins un des deux composants réactionnels, conformément à l'étape (e).

9. Procédé selon une ou plusieurs des revendications 1 à 8, caractérisé en ce que lors du mélangeage des composants réactionnels conformément à l'étape (a), on dispose préalablement le silicate de métal alcalin dans la quantité stoechiométriquement requise et que l'on additionne et ajoute postérieurement dans l'étape (e) l'aluminate de métal alcalin soit en déficit stoechiométrique, soit dans la quantité stoechiométriquement requise

10. Procédé selon la revendication 9, caractérisé en ce que les zéolithes cristallines du type A obtenues présentent une grosseur de particule moyenne inférieure à 3 $\mu$m, spécifiée comme valeur $d_{50}$.